# EUROPEAN PATENT APPLICATION

(11) **EP 3 760 677 A1**
(43) Date of publication of application: **06.01.2021**
(21) Application number: 19756479.2
(22) Date of filing: 25.02.2019
(51) Int. Cl.: C09C 3/08, C01G 9/02, C01G 23/00, C01G 23/04, C01G 25/02, C01G 49/02, C09C 1/00, C09D 17/00

(54) **SURFACE-MODIFIED PARTICLES AND METHOD FOR PRODUCING SAME**

(30) Priority: 26.02.2018 JP 2018031580
(71) Applicant: Maruzen Petrochemical Co., Ltd., Tokyo 104-8502 (JP)
(72) Inventor: YAMAZAKI, Tadashi, Ichihara-shi, Chiba 290-8503 (JP)
(74) Representative: Schiener, Jens
(86) International application number: PCT/JP2019/006951
(87) International publication number: WO 2019/163976

(57) **Abstract**

Provided are surface-modified inorganic compound particles having excellent dispersibility in a water soluble organic solvent, and also having excellent chemical stability in water.

Provided are Surface-modified particles, in which a surface of inorganic compound particle is modified with a compound represented by the following formula (1) or a salt thereof.

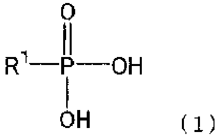

[In formula (1), R¹ represents an alkyl group having 1 to 4 carbon atoms or an alkenyl group having 2 to 4 carbon atoms.]

## Description

### Technical Field

The present invention relates to surface-modified particles and a method for producing the same.

### Background Art

Inorganic compound particles are used for various uses such as an optical material, a catalyst, and cosmetics. Generally, in order to cause the inorganic compound particles to stably exhibit performance thereof for a long period of time, it is necessary to keep the particles in an excellent dispersion state in a dispersion medium.

As one of methods for keeping the inorganic compound particles in a dispersion state, a method for previously modifying the particles with a surface treatment agent is known. Various surface treatment agents are used depending on the type of a dispersion medium, the metal type of the particles, and use.

For example, in use for an optical material, an organic solvent is often used as a dispersion medium in order to facilitate kneading with a resin component. In order to improve the dispersibility of particles in such an organic solvent, a silane coupling agent has been used as a surface treatment agent (Patent Literature 1).

As a compound used as a surface treatment agent, in addition to the silane coupling agent, a phosphate compound and a salt thereof, and a (co) polymer of phosphonic acid or phosphinic acid have been reported (Patent Literatures 2 to 4). It is said that a phosphorus atom in such a phosphorus compound is firmly bonded to inorganic compound particles.

However, the particle whose surface is modified with a silane coupling agent or a phosphate compound is easily hydrolyzed and have insufficient chemical stability in water. Therefore, it is difficult to use the particles in the cosmetic field where water is often used as a dispersion medium.

In addition, the particle whose surface is modified with a (co) polymer of phosphonic acid or phosphinic acid has room for improvement in dispersibility in a water soluble organic solvent. In addition, a main chain of the polymer inhibits a bond between a phosphorus atom and inorganic compound particles, and a modification ratio of the polymer to the particles may be reduced disadvantageously. Furthermore, in the production of the polymer, a polymerization operation is required, and thus it results in increasing the number of steps in a surface treatment.

### Citation List

### Patent Literature

Patent Literature 1: WO 2016/136765 A
Patent Literature 2: JP-A H11-21469
Patent Literature 3: JP-A H2-307524
Patent Literature 4: JP 5497446 B2

### Summary of Invention

### Technical Problem

Under the above-described background, the present inventor conducted a surface modification of an inorganic compound particle with phenyl phosphonic acid, and the particles consequently had insufficient dispersibility in a water soluble organic solvent. In addition, as described above, generally, a phosphorus atom in a phosphorus compound is firmly bonded to inorganic compound particles. However, the particle whose surface is modified with phenyl phosphonic acid easily released phenyl phosphonic acid in water and had insufficient chemical stability in water.

An object of the present invention is to provide surface-modified inorganic compound particles having excellent dispersibility in a water soluble organic solvent, and also having excellent chemical stability in water.

### Solution to Problem

Then, the present inventor made intensive studies. As a result, the present inventor found that by conducting a surface modification of an inorganic compound particle with a specific alkyl or alkenyl phosphonic acid or a salt thereof, it is possible to obtain particles which have excellent dispersibility in a water soluble organic solvent, hardly cause release of a phosphorus compound or hydrolysis, and have excellent chemical stability in water. Therefore, the present invention is completed.

That is, the present invention provides the following <1> to <8>.
<1> Surface-modified particles, in which a surface of inorganic compound particle is modified with a compound represented by the following formula (1) (hereinafter, also referred to as compound (1)) or a salt thereof (hereinafter, also referred to as surface-modified particles of the present invention). 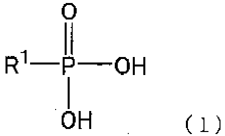
   [In formula (1), R¹ represents an alkyl group having 1 to 4 carbon atoms or an alkenyl group having 2 to 4 carbon atoms.]
<2> The surface-modified particles according to <1>, in which the compound represented by formula (1) is vinyl phosphonic acid.
<3> The surface-modified particles according to <1> or <2>, in which the inorganic compound particles are inorganic oxide particles.
<4> The surface-modified particles according to any one of <1> to <3>, in which the inorganic compound particles are particles whose surfaces are formed of at least one inorganic compound selected from the group consisting of titanium oxide, iron oxide, zirconium oxide, zinc oxide, and barium titanate.
<5> The surface-modified particles according to any one of <1> to <4>, having a volume 50% average particle size (D₅₀) of 1 to 200 nm when the surface-modified particles are dispersed in 1-methoxy-2-propanol and measured by a dynamic light scattering method.
<6> A particle dispersion having the surface-modified particles according to any one of <1> to <5> dispersed in a dispersion medium (hereinafter, also referred to as a particle dispersion of the present invention).
<7> The particle dispersion according to <6>, in which the dispersion medium is at least one selected from the group consisting of water and a water soluble organic solvent.
<8> A method for producing surface-modified particles, including a surface modification step of conducting surface modification of inorganic compound particles with compound (1) or a salt thereof (hereinafter, also referred to as a production method of the present invention).

### Advantageous Effects of Invention

The surface-modified particles of the present invention have excellent dispersibility in a water soluble organic solvent, hardly cause release of a phosphorus compound or hydrolysis, and have excellent chemical stability in water.

According to the production method of the present invention, surface-modified particles which have excellent dispersibility in a water soluble organic solvent, hardly cause release of a phosphorus compound or hydrolysis, and have excellent chemical stability in water can be produced easily in a short time.

### Brief Description of Drawings

Fig. 1 is a graph illustrating a concentration of vinyl phosphonic acid in an upper layer of a treated solution after centrifugation at each treatment time.
Fig. 2 is a graph illustrating a FT-IR spectrum of a sample obtained in Example 1.
Fig. 3 is a diagram illustrating a ¹H-NMR spectrum measured after phenyl phosphoric acid-treated titanium oxide (Comparative Example 2) was immersed in water.
Fig. 4 is a diagram illustrating a ¹H-NMR spectrum measured after phenyl phosphonic acid-treated titanium oxide (Comparative Example 3) was immersed in water.
Fig. 5 is a diagram illustrating a ³¹P-NMR spectrum measured after phenyl phosphonic acid-treated titanium oxide (Comparative Example 3) was immersed in water.
Fig. 6 is a diagram illustrating a ¹H-NMR spectrum measured after vinyl phosphonic acid-treated titanium oxide (Example 1) was immersed in water.
Fig. 7 is a diagram illustrating a ³¹P-NMR spectrum measured after vinyl phosphonic acid-treated titanium oxide (Example 1) was immersed in water.

### Description of Embodiments

### [Surface-modified particles]

Surface-modified particles of the present invention are particles formed by modifying surfaces of inorganic compound particles with compound (1) or a salt thereof. First, the surface-modified particles of the present invention will be described.

### (Compound (1) or salt thereof)

In formula (1), R¹ represents an alkyl group having 1 to 4 carbon atoms or an alkenyl group having 2 to 4 carbon atoms. When this number of carbon atoms is more than 4, dispersibility and chemical stability are insufficient.

In formula (1), the number of carbon atoms of the alkyl group represented by R¹ is preferably 1 or 2. The alkyl group may be linear or branched. Specific examples of the alkyl group include a methyl group, an ethyl group, an n-propyl group, an isopropyl group, an n-butyl group, an isobutyl group, a sec-butyl group, and a tert-butyl group.

The number of carbon atoms of the alkenyl group represented by R¹ is preferably 2 or 3. The alkenyl group may be linear or branched. Specific examples of the alkenyl group include a vinyl group, an allyl group, an isopropenyl group, and a butenyl group.

Examples of compound (1) include vinyl phosphonic acid, allyl phosphonic acid, 1-methylethenyl phosphonic acid, and 3-butenyl phosphonic acid. Among these compounds, vinyl phosphonic acid is particularly preferable from viewpoints of dispersibility in water or a water soluble organic solvent and chemical stability in water.

Specific examples of the salt of compound (1) include: an alkali metal salt such as a sodium salt or a potassium salt; and an ammonium salt.

The surface-modified particles of the present invention are preferably particles in which a group PO- derived from P=O in formula (1) is bonded to inorganic compound particles from a viewpoint of chemical stability in water.

### (Inorganic compound particles)

The inorganic compound particles may be particles formed of one inorganic compound or composite particles of two or more inorganic compounds. The concept of the inorganic compound particles includes, for example, particles obtained by coating such inorganic compound particles serving as cores with inorganic compound shells (for example, a brilliant pigment obtained by coating mica with titanium oxide), particles obtained by further coating the particles with inorganic compound shells, and alloy particles. The surface-modified particles of the present invention are preferably particles obtained by directly modifying surfaces of particles formed of one or more inorganic compounds with compound (1) or a salt thereof.

The inorganic compound particles preferably contain an inorganic oxide, and more preferably contain a metal oxide from a viewpoint of dispersibility in water or a water soluble organic solvent. In addition, inorganic compound particles whose surfaces are formed of such an inorganic oxide are preferable. Note that the inorganic oxide and the metal oxide also include a composite oxide such as barium titanate or strontium titanate.

As "metal" in the metal oxide, an alkali metal, an alkaline earth metal, and metals of Group 3 to Group 13 are preferable, an alkaline earth metal and metals of Group 4 to Group 13 are more preferable, and an alkaline earth metal and metals of Group 4 to Group 12 are particularly preferable. Preferable specific examples of the metal include barium, titanium, zinc, iron, zirconium, magnesium, aluminum, and calcium. Barium, titanium, zinc, iron, and zirconium are particularly preferable.

Specific examples of the inorganic compound include titanium oxide, iron oxide (for example, iron oxide, yellow iron oxide, or black iron oxide), zirconium oxide, zinc oxide, barium titanate, strontium titanate, silicon oxide, tin oxide, cerium oxide, magnesium oxide, aluminum oxide, barium sulfate, calcium sulfate, calcium carbonate, magnesium sulfate, magnesium carbonate, talc, kaolin, sericite, bentonite, mica, synthetic mica, and phlogopite.

Among these compounds, titanium oxide, iron oxide, zirconium oxide, zinc oxide, and barium titanate are preferable from a viewpoint of dispersibility in water or a water soluble organic solvent.

Note that titanium oxide and zinc oxide generally have a tendency to be hardly dispersed in a water soluble organic solvent. However, the surface-modified particles of the present invention have excellent dispersibility in a water soluble organic solvent even when titanium oxide and zinc oxide are used.

The shapes of the inorganic compound particles are not particularly limited, and examples of the shapes include a spherical shape, a fiber shape, a needle shape, a scale shape, and a plate shape. Examples of the shapes also include a hollow shape. The inorganic compound particles before modification preferably have an average particle size in a range of 1 to 100 nm.

The surface-modified particles of the present invention preferably have a phosphorus element concentration of 5,000 to 50,000 ppm, more preferably 7,500 to 30,000 ppm, and particularly preferably 12,000 to 20,000 ppm. Note that the phosphorus element concentration means a phosphorus element concentration in the surface-modified particles measured by ICP emission spectrometry.

When the inorganic compound particles contain a metal oxide, the surface-modified particles of the present invention preferably have a metal element concentration of 100,000 to 1,000,000 ppm. A ratio between the phosphorus element concentration and the metal element concentration [P (phosphorus element)/M (metal element)] is preferably 2 to 7, and more preferably 2.75 to 3.5. Note that the metal element concentration means a metal element concentration in the surface-modified particles measured by ICP emission spectrometry.

The surface-modified particles of the present invention have a volume 50% average particle size (D₅₀) of preferably 1 to 200 nm, more preferably 5 to 175 nm, particularly preferably 10 to 150 nm when the surface-modified particles are dispersed in 1-methoxy-2-propanol and measured by a dynamic light scattering method. Note that specifically, the volume 50% average particle size (D₅₀) only needs to be measured in a similar manner to Examples.

### [Method for producing surface-modified particles]

Next, the production method of the present invention will be described.

The production method of the present invention includes a surface modification step of conducting surface modification of inorganic compound particles with compound (1) or a salt thereof.

Specific examples of the method include a method for adding a solution of compound (1) or a salt thereof to a dispersion of the inorganic compound particles and stirring the resulting mixture.

As a dispersion medium of the inorganic compound particles and a solvent of compound (1) or a salt thereof, water, a water soluble organic solvent, or a mixture thereof is used. Here, the term "water soluble" means that solubility in water at 25°C (the amount of solute with respect to 100 g of water) is 1 g or more.

Examples of the water soluble organic solvent include: a monohydric alcohol-based solvent such as methanol, ethanol, or isopropanol; a polyhydric alcohol-based solvent such as ethylene glycol, propylene glycol, glycerin, or diethylene glycol; an ether alcohol-based solvent such as ethylene glycol monomethyl ether (methylcellosorb), ethylene glycol monoethyl ether (cellosolve), or propylene glycol monomethyl ether; an amide-based solvent such as N,N-dimethylformamide or N-methylpyrrolidone; a sulfoxide-based solvent such as dimethyl sulfoxide; a ketone-based solvent such as acetone or methyl ethyl ketone; an ester-based solvent such as ethyl acetate; and a cyclic ether-based solvent such as tetrahydrofuran or dioxane. These solvents may be used singly or in combination of two or more types thereof. Furthermore, these solvents may be used in combination with water.

The concentration of the inorganic compound particle dispersion is not particularly limited. However, the content of the inorganic compound particles is preferably 1 to 20% by mass, and more preferably 2 to 10% by mass.

The concentration of the solution of compound (1) or a salt thereof is not particularly limited. However, the content of compound (1) is preferably 1 to 20% by mass, and more preferably 2 to 10% by mass.

Temperature in the surface modification step is preferably 20 to 60°C, and more preferably 20 to 40°C.

Time for the surface modification step varies depending on the type and amount of the inorganic compound and the temperature. However, the time is preferably 0.1 to 24 hours, and more preferably 0.2 to 16 hours.

The surface-modified particles prepared as described above can be treated and isolated by a known operation and treatment method. For example, a method for settling down particles by centrifugation and isolating the particles by a filtration and drying operation is used.

The surface-modified particles of the present invention have excellent dispersibility in water or a water soluble organic solvent. In addition, the surface-modified particles of the present invention not only have a strong bond between a phosphorus atom and inorganic compound particles to hardly release a phosphorus compound, but also have high hydrolysis resistance, and therefore have excellent chemical stability in water. For example, a disadvantage such as discoloration due to hydrolysis that may occur when titanium oxide is modified is less likely to occur. When the inorganic compound is titanium oxide, surface-modified particles having a similar color tone (white) to titanium oxide before modification are obtained. Therefore, a wide range of applications is possible also in the field of cosmetics, for example.

Therefore, the surface-modified particles of the present invention are useful as a raw material for an optical material, a catalyst, and cosmetics, for example.

The isolated surface-modified particles can be redispersed in the above-described dispersion medium to obtain a particle dispersion.

### [Particle dispersion]

In the particle dispersion of the present invention, the surface-modified particles of the present invention are dispersed in a dispersion medium. Examples of the dispersion medium include at least one selected from the group consisting of water and a water soluble organic solvent. Examples of the water soluble organic solvent include similar ones to those that can be used in the production method of the present invention.

With regard to the above-described embodiment, the present invention further discloses the following surface-modified particles (in the following aspects, for example, the meanings of various terms are similar to those described above).

Surface-modified particles including inorganic compound particles and a molecule that modifies surfaces of the inorganic compound particles, in which the molecule is represented by formula (2).

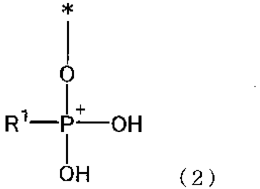

[In formula (2), R¹ represents an alkyl group having 1 to 4 carbon atoms or an alkenyl group having 2 to 4 carbon atoms, and * indicates a bonding position to the inorganic compound particles.]

### Examples

Hereinafter, the present invention will be described in detail based on Examples. However, the present invention is not limited to the Examples.

### [Example 1: Preparation of vinyl phosphonic acid-treated titanium oxide)

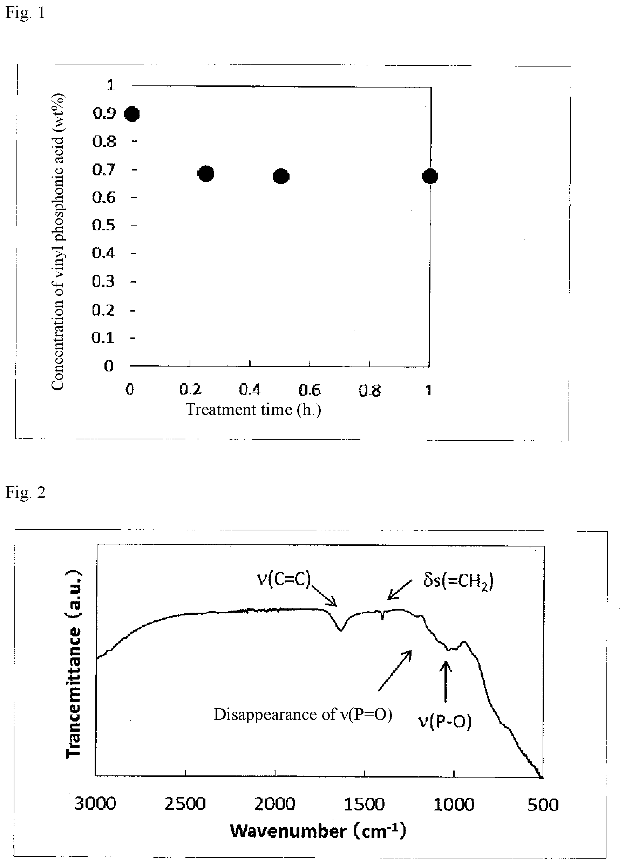

In a 100 mL beaker, 1.2 g of titanium oxide (manufactured by Strem Chemicals, Inc., particle size: 20 to 40 nm) and 24.6 g of deionized water were mixed. Thereafter, 6.2 g of a vinyl phosphonic acid aqueous solution adjusted to 4.7% by mass was added thereto, and the resulting mixture was stirred at room temperature for 15 minutes. Subsequently, the mixed solution was irradiated with ultrasonic waves to be dispersed, and then centrifuged to remove the supernatant. Note that the concentration of an unreacted vinyl phosphonic acid in an upper layer (supernatant) of the treated solution was calculated from a measured refractive index value (refractive index measuring device: RX-5000CX manufactured by ATAGO Co., Ltd.). Fig. 1 illustrates results thereof.

Next, 40 g of deionized water was added to the precipitate obtained by the centrifugation, and the resulting mixture was again irradiated with ultrasonic waves and centrifuged. By repeating the process from the redispersion to the centrifugation four times in total, vinyl phosphonic acid not used for the surface treatment was sufficiently removed. The remaining precipitate was dried under reduced pressure at 130°C for two hours to obtain vinyl phosphonic acid-treated titanium oxide.

### [Test Example 1: Examination of surface treatment time]

A similar operation to Example 1 was performed except that the stirring time after addition of the vinyl phosphonic acid aqueous solution was changed to 0 minutes, 30 minutes, and one hour. The concentration of unreacted vinyl phosphonic acid in an upper layer of the treated solution (supernatant) was calculated. Fig. 1 illustrates results thereof.

As illustrated in Fig. 1, after the treatment time of 15 minutes, the concentration of vinyl phosphonic acid did not change. This indicates that vinyl phosphonic acid was saturatedly adsorbed on titanium oxide. From this result, it found that a treatment time of 15 minutes with vinyl phosphonic acid was sufficient.

### [Test Example 2: Surface composition analysis]

A surface atom bonding state of the vinyl phosphonic acid-treated titanium oxide obtained in Example 1 was measured with a Fourier transform infrared spectrophotometer (FT-IR). Fig. 2 illustrates results thereof.

Measuring device: Spectrum 100 manufactured by PerkinElmer Inc.

### Measurement method: ATR method

As illustrated in Fig. 2, an absorption band of P=O (1136 cm⁻¹) disappeared, and an absorption band of P-O (1040 to 1050 cm⁻¹) was broadened. From this result, it estimated that a surface of titanium oxide is modified with vinyl phosphonic acid by a -PO- bond.

### [Example 2: Preparation of vinyl phosphonic acid-treated iron oxide]

A similar treatment to Example 1 was performed except that iron oxide (manufactured by Wako Pure Chemical Industries, Ltd., particle size: 25 nm) was used instead of titanium oxide in Example 1, to obtain vinyl phosphonic acid-treated iron oxide.

### [Example 3: Preparation of vinyl phosphonic acid-treated zirconium oxide]

A similar treatment to Example 1 was performed except that zirconium oxide (manufactured by Wako Pure Chemical Industries, Ltd., particle size: 10 nm) was used instead of titanium oxide in Example 1, to obtain vinyl phosphonic acid-treated zirconium oxide.

### [Example 4: Preparation of vinyl phosphonic acid-treated zinc oxide]

A similar treatment to Example 1 was performed except that zinc oxide (manufactured by Wako Pure Chemical Industries, Ltd., particle size: 20 nm) was used instead of titanium oxide in Example 1, to obtain vinyl phosphonic acid-treated zinc oxide.

### [Example 5: Preparation of vinyl phosphonic acid-treated barium titanate]

A similar treatment to Example 1 was performed except that barium titanate (manufactured by Alfa Aesar, particle size: 20 nm) was used instead of titanium oxide in Example 1, to obtain vinyl phosphonic acid-treated barium titanate.

### [Comparative Example 1]

A similar treatment to Example 1 was performed except that vinyl phosphonic acid was not added in Example 1, to obtain a comparative sample of titanium oxide.

### [Comparative Example 2: Preparation of phenyl phosphoric acid-treated titanium oxide]

A similar treatment to Example 1 was performed except that phenyl phosphoric acid (manufactured by Combi-Blocks Inc.) was used instead of vinyl phosphonic acid in Example 1, to obtain phenyl phosphoric acid-treated titanium oxide.

### [Comparative Example 3: Preparation of phenyl phosphonic acid-treated titanium oxide]

A similar treatment to Example 1 was performed except that phenyl phosphonic acid (manufactured by Wako Pure Chemical Industries, Ltd.) was used instead of vinyl phosphonic acid in Example 1, to obtain phenyl phosphonic acid-treated titanium oxide.

### [Comparative Example 4: Preparation of oleyl phosphate-treated titanium oxide]

A similar treatment to Example 1 was performed except that deionized water was replaced with methanol and vinyl phosphonic acid was replaced with oleyl phosphate (manufactured by Tokyo Chemical Industry Co., Ltd., a mixture of mono- and di-forms) in Example 1, to obtain oleyl phosphate-treated titanium oxide.

### [Comparative Example 5: Preparation of polyvinyl phosphonic acid-treated titanium oxide]

Under a nitrogen atmosphere, 30 g of vinyl phosphonic acid and 23.7 g of deionized water were mixed in a 100 mL flask. Subsequently, an aqueous solution of 2,2'-azobis(2-methylpropionamidine) dihydrochloride (manufactured by Wako Pure Chemical Industries, Ltd.) adjusted to 18% by mass was added thereto, and the resulting mixture was stirred for 24 hours while the internal temperature was adjusted to 70°C, to obtain polyvinyl phosphonic acid. The weight average molecular weight (Mw) and the molecular weight distribution (Mw/Mn) of the obtained polymer were calculated by performing measurement by gel permission chromatography (GPC) under the following conditions, and converting the measured values using a standard polyethylene glycol sample.

### (Measurement conditions of molecular weight)

GPC measuring device: LC-Solution manufactured by Shimazdu Corporation
Column: Shodex SB-805HQ and SB-804HQ
Pre-column: Shodex SB-G
Column temperature: 40°C
Mobile phase: 0.2 M NaCl aqueous solution
Flow rate: 0.5 mL/min
Detector: RI detector

The obtained polyvinyl phosphonic acid had a weight average molecular weight (Mw) of 10,000 and a molecular weight distribution (Mw/Mn) of 1.84.

Subsequently, a similar treatment to Example 1 was performed except that the above polyvinyl phosphonic acid was used instead of vinyl phosphonic acid in Example 1, to obtain polyvinyl phosphonic acid-treated titanium oxide.

### [Comparative Example 6]

A similar treatment to Example 2 was performed except that vinyl phosphonic acid was not added in Example 2, to obtain a comparative sample of iron oxide.

### [Comparative Example 7]

A similar treatment to Example 3 was performed except that vinyl phosphonic acid was not added in Example 3, to obtain a comparative sample of zirconium oxide.

### [Comparative Example 8]

A similar treatment to Example 4 was performed except that vinyl phosphonic acid was not added in Example 4, to obtain a comparative sample of zinc oxide.

### [Comparative Example 9]

A similar treatment to Example 5 was performed except that vinyl phosphonic acid was not added in Example 5, to obtain a comparative sample of barium titanate.

### [Test Example 3: Element content analysis]

The amount of a surface treatment agent contained in the surface-treated inorganic compound particles obtained in each of Example 1 and Comparative Examples 1 to 5 was measured by high frequency inductively coupled plasma (ICP) emission spectrometry using the following device and quantitative method. Table 1 illustrates results thereof.

ICP emission analyzer: ICPE-9800 manufactured by Shimazdu Corporation

Quantitative method: standard curve method

**[Table 1]**

| | | Ti | P | P/Ti |
|---|---|---|---|---|
| | | (ppm) | (ppm) | - |
| Example 1 | Vinyl phosphonic acid-treated titanium oxide | 458971 | 13676 | 2.98 |
| Comparative Example 1 | Titanium oxide | 456197 | 368 | 0.08 |
| Comparative Example 2 | Phenyl phosphoric acid-treated titanium oxide | 458254 | 10824 | 2.36 |
| Comparative Example 3 | Phenyl phosphonic acid-treated titanium oxide | 438266 | 11415 | 2.60 |
| Comparative Example 4 | Oleyl phosphate-treated titanium oxide | 447874 | 9762 | 2.18 |
| Comparative Example 5 | Polyvinyl phosphonic acid-treated titanium oxide | 483261 | 11790 | 2.44 |

As illustrated in Table 1, the vinyl phosphonic acid-treated titanium oxide in Example 1 had the highest phosphorus concentration as compared with the surface-treated inorganic compound particles in Comparative Examples 1 to 5. This indicates that the amount modified with vinyl phosphonic acid is large.

### [Test Example 4: Confirmation of stability in water]

The surface-treated inorganic compound particles obtained in each of Example 1 and Comparative Examples 2 and 3 were added to heavy water such that the sample concentration was 5% by mass, and were immersed therein for one day. Thereafter, the supernatant of the heavy water was measured with 400 MHz ¹H-NMR (measuring device: JEOL AL-400) and 160 MHz ³¹P-NMR (measuring device: JEOL AL-400), and stability of the surface-treated inorganic compound particles in water was thereby confirmed.

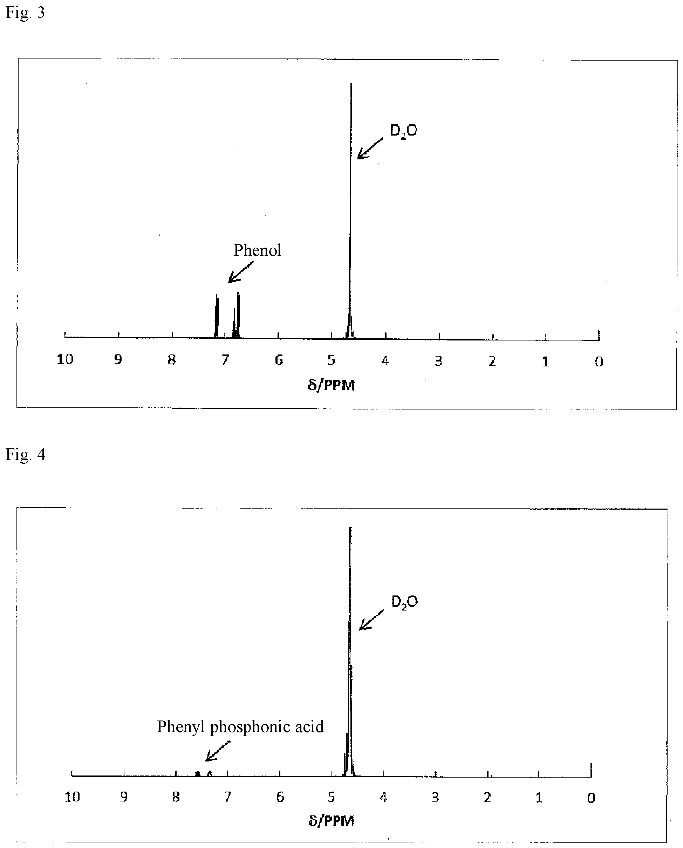

As a result, for phenyl phosphoric acid-treated titanium oxide (Comparative Example 2), a peak derived from phenol was detected in an ¹H-NMR spectrum, indicating that phenyl phosphoric acid on surfaces of the particles was hydrolyzed in water to generate phenol and phosphoric acid (Fig. 3).

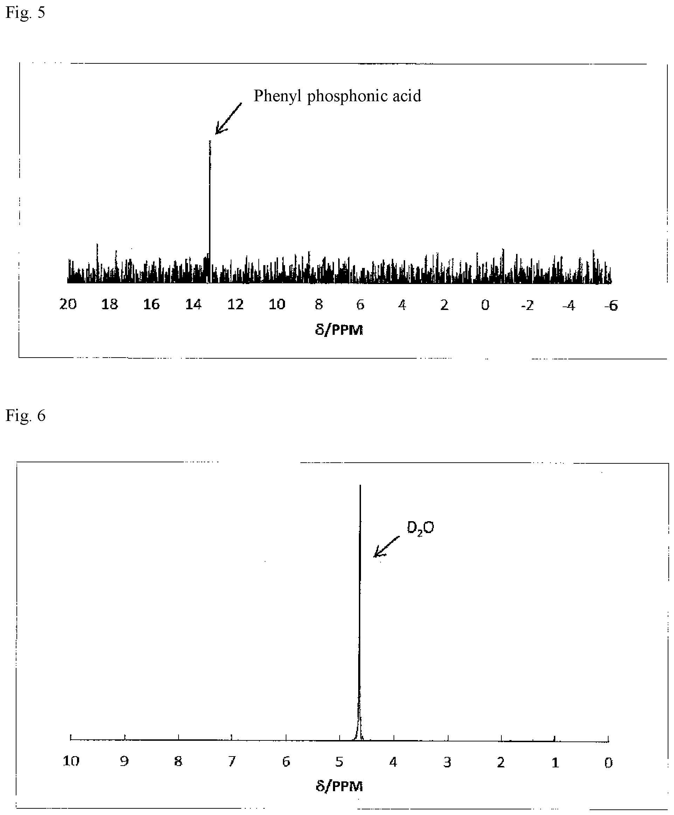

For phenyl phosphonic acid-treated titanium oxide (Comparative Example 3), a peak derived from phenyl phosphonic acid was detected, indicating that phenyl phosphonic acid was released from the inorganic compound particles in water (Figs. 4 and 5).

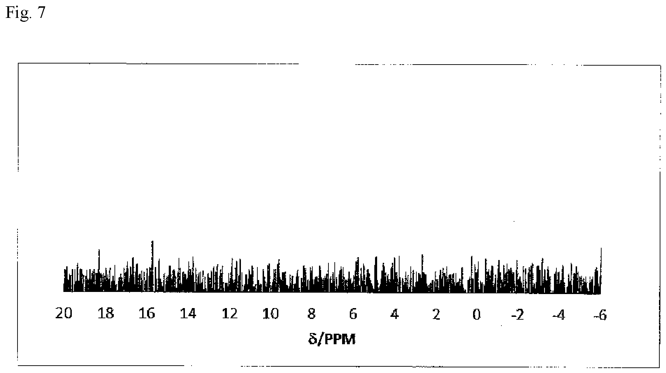

Meanwhile, for vinyl phosphonic acid-treated titanium oxide (Example 1), a peak derived from a phosphorus compound or a peak due to hydrolysis was not detected, indicating that the surface-treated inorganic compound particles were stably present even in water (Figs. 6 and 7).

### [Test Example 5: volume 50% average particle size (D₅₀) and polydispersity index (PdI)]

The surface-treated inorganic compound particles obtained in each of Examples 1 to 5 and Comparative Examples 1 to 9 were diluted with 1-methoxy-2-propanol (PGME) such that the sample concentration was 0.5% by mass, and were irradiated with ultrasonic waves. Next, a volume 50% average particle size (D₅₀) and a polydispersity index (PdI) were measured by a dynamic light scattering method (DLS) (DLS measuring device: Zetasizer Nano S manufactured by Malvern, measurement temperature: 25°C), and evaluation was performed in accordance with the following criteria. Table 2 illustrates results thereof. Note that the polydispersity index is an index indicating the width of a particle size distribution.

### (Evaluation criteria for particle size (D₅₀))

D₅₀ is 150 nm or less: A
D₅₀ is more than 150 nm: B

### (Evaluation criteria for PdI)

PdI is 0.125 or less: A
PdI is more than 0.125 and 0.175 or less: B
PdI is more than 0.175: C

**[Table 2]**

| | Surface treatment agent | Type of metal oxide | Dispersion medium | D₅₀ | | PdI | |
|---|---|---|---|---|---|---|---|
| | | | | Measured value (nm) | Evaluation | Measured value | Evaluation |
| Example 1 | Vinyl phosphonic acid | Titanium oxide | PGME | 149 | A | 0.082 | A |
| Comparative Example 1 | - | Titanium oxide | PGME | 199 | B | 0.290 | C |
| Comparative Example 2 | Phenyl phosphoric acid | Titanium oxide | PGME | 110 | A | 0.104 | A |
| Comparative Example 3 | Phenyl phosphonic acid | Titanium oxide | PGME | 144 | A | 0.208 | C |
| Comparative Example 4 | Oleyl phosphate | Titanium oxide | PGME | 178 | B | 0.713 | C |
| Comparative Example 5 | Polyvinyl phosphonic acid | Titanium oxide | PGME | 151 | B | 0.146 | B |
| Example 2 | Vinyl phosphonic acid | Iron oxide | PGME | 124 | A | 0.100 | A |
| Comparative | - | Iron | PGME | 159 | B | 0.061 | A |
| Example 6 | | oxide | | | | | |
| Example 3 | Vinyl phosphonic acid | Zirconium oxide | PGME | 117 | A | 0.038 | A |
| Comparative Example 7 | - | Zirconium oxide | PGME | 132 | A | 0.071 | A |
| Example 4 | Vinyl phosphonic acid | Zinc oxide | PGME | 102 | A | 0.120 | A |
| Comparative Example 8 | - | Zinc oxide | PGME | 117 | A | 0.206 | C |
| Example 5 | Vinyl phosphonic acid | Barium titanate | PGME | 139 | A | 0.082 | A |
| Comparative Example 9 | - | Barium titanate | PGME | 134 | A | 0.169 | B |

As illustrated in Table 2, the particles formed by conducting surface treatment of titanium oxide with phenyl phosphonic acid, oleyl phosphate, or polyvinyl phosphonic acid (Comparative Examples 3 to 5) had a large value for at least one of D₅₀ and PdI, and had insufficient dispersibility in a water soluble organic solvent.

Meanwhile, the particles formed by conducting surface treatment of titanium oxide with vinyl phosphonic acid (Example 1) had small values for both D₅₀ and PdI, and were found to have excellent dispersibility in a water soluble organic solvent. Note that the particles whose surface are treated with phenyl phosphoric acid (Comparative Example 2) had dispersibility equal to the particles in Example 1. However, as illustrated in Test Example 4, the particles whose surface are treated with phenyl phosphoric acid (Comparative Example 2) has another disadvantage that phenyl phosphoric acid is easily hydrolyzed.

In addition, zinc oxide is an inorganic compound that is hardly dispersed in PGME like titanium oxide. However, as illustrated in Table 2, by conducting surface treatment of zinc oxide with vinyl phosphonic acid, dispersibility thereof can also be improved (Example 4 and Comparative Example 8). Furthermore, even when iron oxide, zirconium oxide, and barium titanate were subjected to surface treatment with vinyl phosphonic acid, dispersibility thereof in a water soluble organic solvent was sufficiently satisfied (Examples 2, 3, and 5).

## Claims

1. Surface-modified particles, wherein a surface of inorganic compound particle is modified with a compound represented by the following formula (1) or a salt thereof. 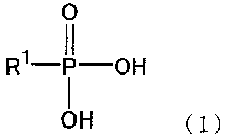 wherein R¹ represents an alkyl group having 1 to 4 carbon atoms or an alkenyl group having 2 to 4 carbon atoms.

2. The surface-modified particles according to claim 1, wherein the compound represented by formula (1) is vinyl phosphonic acid.

3. The surface-modified particles according to claim 1 or 2, wherein the inorganic compound particles are inorganic oxide particles.

4. The surface-modified particles according to any one of claims 1 to 3, wherein the inorganic compound particles are particles whose surfaces are formed of at least one inorganic compound selected from the group consisting of titanium oxide, iron oxide, zirconium oxide, zinc oxide, and barium titanate.

5. The surface-modified particles according to any one of claims 1 to 4, having a volume 50% average particle size (D₅₀) of 1 to 200 nm when the surface-modified particles are dispersed in 1-methoxy-2-propanol and measured by a dynamic light scattering method.

6. A particle dispersion having the surface-modified particles according to any one of claims 1 to 5 dispersed in a dispersion medium.

7. The particle dispersion according to claim 6, wherein the dispersion medium is at least one selected from the group consisting of water and a water soluble organic solvent.

8. A method for producing surface-modified particles, comprising a surface modification step of conducting surface modification of inorganic compound particles with a compound represented by the following formula (1) or a salt thereof. 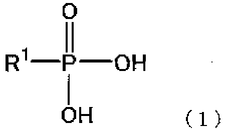 wherein R¹ represents an alkyl group having 1 to 4 carbon atoms or an alkenyl group having 2 to 4 carbon atoms.
